# EUROPEAN PATENT SPECIFICATION

(11) **EP 4 462 375 B1**
(45) Date of publication and mention of the grant of the patent: **10.12.2025**
(21) Application number: 23172553.2
(22) Date of filing: 10.05.2023
(51) Int. Cl.: G06V 10/20, G06V 10/75, G06V 20/58

(54) **APPARATUS AND METHOD FOR PERCEIVING OBJECT**
VORRICHTUNG UND VERFAHREN ZUR WAHRNEHMUNG EINES OBJEKTS
APPAREIL ET PROCÉDÉ POUR PERCEPTION D'OBJET

(43) Date of publication of application: 13.11.2024
(73) Proprietor: Hyundai Mobis Co., Ltd., Gangnam-gu Seoul 06141 (KR)
(72) Inventor: CHANDRASEKARAN, Pradeep, 65760 Eschborn (DE)
(74) Representative: Frenkel, Matthias Alexander

(56) References cited:
- WO-A1-2018/127789
- US-A1- 2015 185 003

## Description

### BACKGROUND

### FIELD

Exemplary embodiments of the present disclosure relate to an apparatus and method for perceiving an object, and more particularly, to an apparatus and method for perceiving a surrounding object in an autonomous vehicle.

### DISCUSSION OF THE BACKGROUND

Today, the auto industry proceeds to implement autonomous driving for minimizing the intervention of a driver in the driving of a vehicle. An autonomous vehicle refers to a vehicle that autonomously determines its driving path by recognizing a surrounding environment by using a function for detecting and processing external information upon driving and that independently drives by using its electric power.

The autonomous vehicle may drive up to its destination by itself while preventing a collision against an obstacle on a driving path although a driver does not manipulate a steering wheel, an acceleration pedal, or a brake and adjusting its vehicle speed and driving direction depending on a shape of a road. For example, the autonomous vehicle may perform acceleration in a straight road and perform deceleration while changing its driving direction in accordance with curvature of a curved road in the curved road.

The autonomous driving technology consists of perception, determination, and control functions. An autonomous driving system performs the perception function for recognizing, detecting, and tracking a moving object, a surrounding environment object, and a road situation by using a camera sensor, a LiDar sensor, and a radar sensor, performs the determination function for searching for a global path, analyzing a degree of risk, and determining a driving behavior based in the results of the perception function, and performs the control function for controlling the driving of a vehicle based on the results of the perception function and the determination function. Accordingly, in order to accurately and precisely determine and control an autonomous vehicle, an accurate perception function needs to be predetermined.

The background of the present disclosure was disclosed in Korean Patent Application Publication No. 10-2017-0078096 (laid open on July 7, 2017). WO 2018/127789 A1 discloses systems and method for identification and classification of objects using a LIDAR. In the document the LIDAR system is described to detect one or more surface angles of an object based on one or more temporal distortions in reflection signals, identify objects using reflectivity fingerprints, surface angle fingerprints, or other measured properties, such as object surface physical composition, ambient illumination measured at a LIDAR dead time, difference in detection information from a previous frame, and confidence levels associated with one or more detection characteristics.

### SUMMARY

The invention is defined by the appended claims.

### BRIEF DESCRIPTION OF THE DRAWINGS

FIG. 1 is a block diagram illustrating an apparatus for perceiving an object according to an embodiment of the present disclosure.
FIG. 2 is an exemplary diagram illustrating a detection range of a sensor module in the apparatus for perceiving an object according to an embodiment of the present disclosure.
FIG. 3 is an exemplary diagram illustrating an operation of the sensor module in the apparatus for perceiving an object according to an embodiment of the present disclosure.
FIGS. 4 and 5 are exemplary diagrams for describing labeling data in the apparatus for perceiving an object according to an embodiment of the present disclosure.
FIG. 6 is a flowchart illustrating a method of perceiving an object according to an embodiment of the present disclosure.

### DETAILED DESCRIPTION OF THE ILLUSTRATED EMBODIMENTS

Hereinafter, an apparatus and method for perceiving an object according to embodiments of the present disclosure are described with reference to the accompanying drawings. In this process, the thicknesses of lines or the sizes of elements illustrated in the drawings may have been exaggerated for the clarity of a description and for convenience' sake. Terms to be described below have been defined by taking into consideration their functions in the present disclosure, and may be changed depending on a user or operator's intention or practice. Accordingly, such terms should be defined based on the overall contents of this specification.

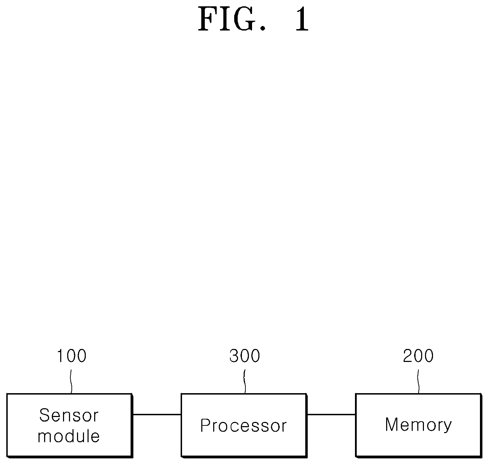

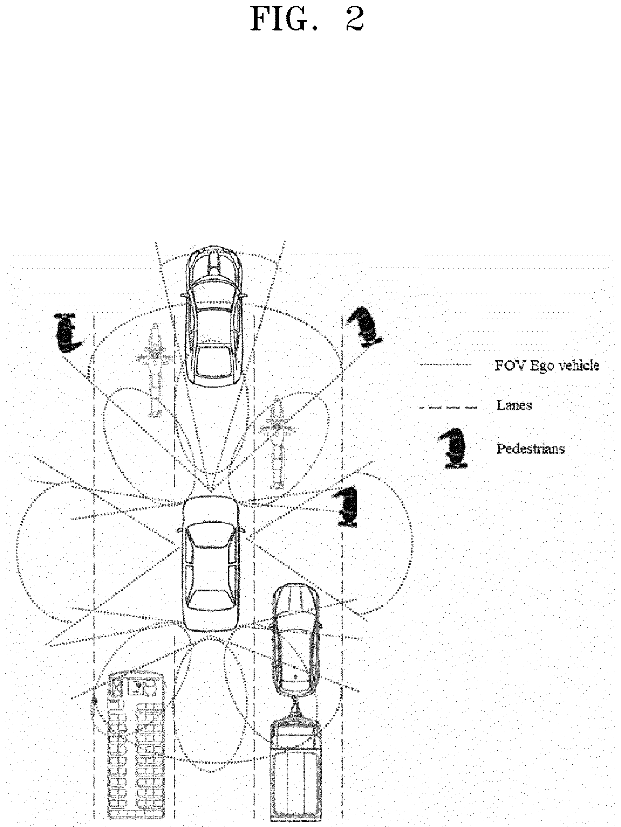

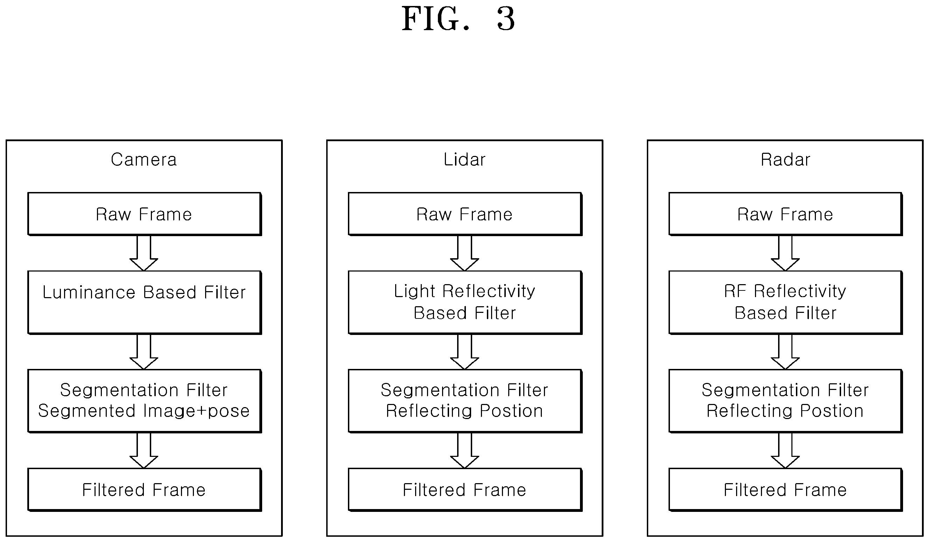

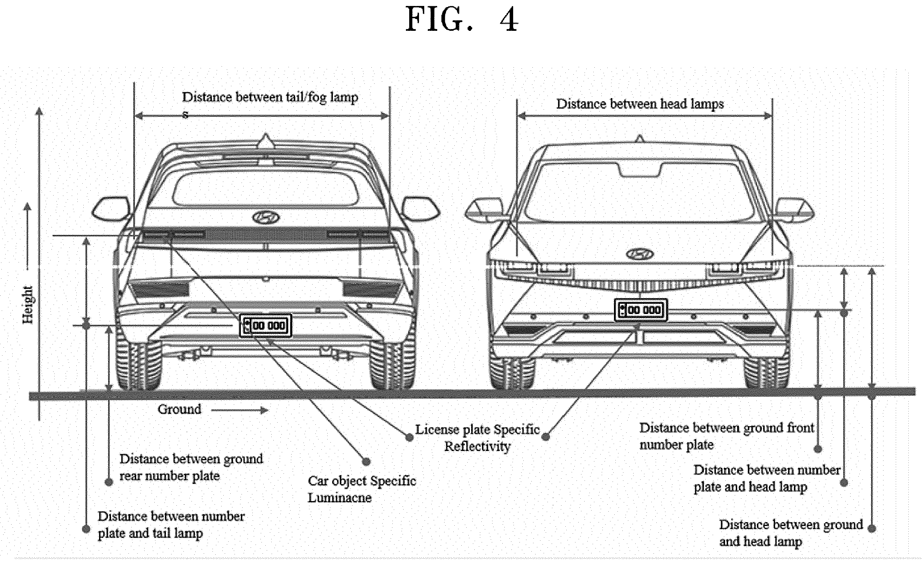

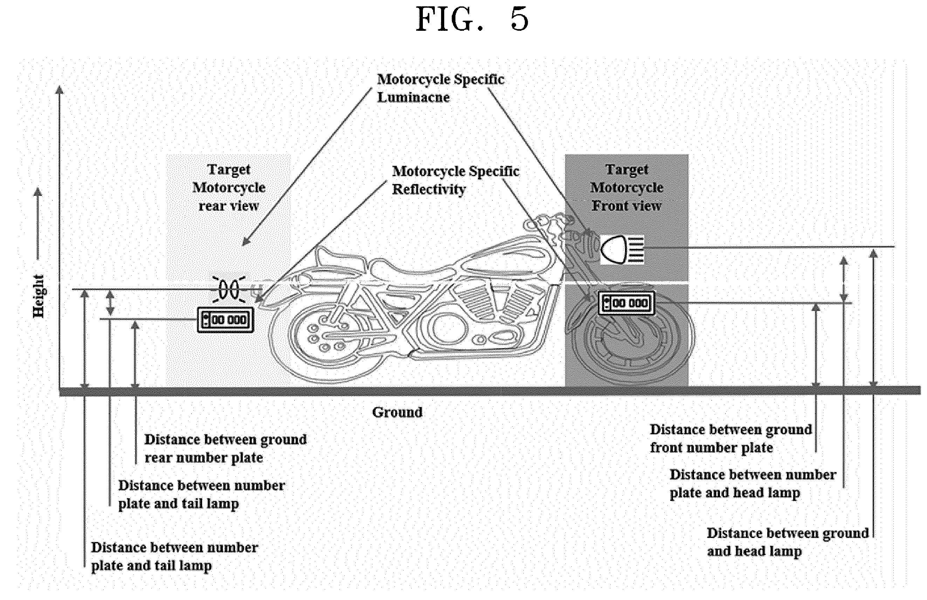

FIG. 1 is a block diagram illustrating an apparatus for perceiving an object according to the present embodiment. FIG. 2 is an exemplary diagram illustrating a detection range of a sensor in the apparatus for perceiving an object according to the present embodiment. FIG. 3 is an exemplary diagram illustrating an operation of a sensor in the apparatus for perceiving an object according to the present embodiment. FIGS. 4 and 5 are exemplary diagrams for describing labeling data in the apparatus for perceiving an object according to the present embodiment.

Referring to FIG. 1, the apparatus for perceiving an object according to the present embodiment includes a sensor module 100, memory 200, and a processor 300.

The sensor module 100 may include a plurality of sensors for detecting an object around an ego vehicle. For example, the sensor module 100 may include a camera sensor, a LiDar sensor, a radar sensor, or an infrared sensor. The sensor module 100 may be mounted at a specific location of a vehicle so that field of views (FOVs) for all the direction of the vehicle, such as FOVs illustrated in FIG. 2, can be secured. As illustrated in FIG. 3, a frame that is obtained by each sensor is transferred to the processor 300 to be described later through a plurality of filtering processes.

The memory 200 stores various data that are necessary for the processor 300 to perceive an object around an ego vehicle. The memory 200 collectively refers to a nonvolatile storage device and a volatile storage device. For example, the memory 200 may include NAND flash memory such as a compact flash (CF) card, a secure digital (SD) card, a memory stick, a solid-state drive (SSD), and a micro SD card, magnetic computer memory devices such as a hard disk drive (HDD), and optical disc drives such as CD-ROM and DVD-ROM.

In the present embodiment, reference labeling data that is necessary to perceive an object around an ego vehicle is stored in the memory 200. The reference labeling data defines the type of object, that is, a target of perception, and may be constructed to include one or more visible parameters which may be detected by the sensor module 100.

The visible parameters that are included in the reference labeling data include at least one of (i) the height of a head lamp (hereinafter referred to as "H1") based on the ground, (ii) the height of a tail lamp (hereinafter referred to as "H2") based on the ground, (iii) a distance between the head lamps on the left and right sides thereof and a distance between the tail lamps on the left and right sides thereof and (hereinafter referred to as "D"), (iv) reflectivity (hereinafter referred to as "R") of an object (a vehicle itself) or a part (e.g., the license plate of a vehicle) that constitutes the object, (v) luminance (hereinafter referred to as "L") of the head lamp or the tail lamp. FIG. 4 illustrates visible parameters by taking a four-wheel vehicle as an example. FIG. 5 illustrates visible parameters by taking a two-wheel vehicle as an example.

The reference labeling data is constructed to include first to N-th reference labeling data (N is a natural number equal to or greater than 2). The reference labeling data defines various types of objects, respectively. For example, a plurality of reference labeling data that define a passenger vehicle, a utility vehicle, a bus, a trailer, an ambulance, a fire truck, a recovery vehicle, and a cleaning vehicle (i.e., four-wheel vehicles), a motorcycle and a bicycle (i.e., two-wheel vehicles), and other three-wheel vehicles, respectively, may be defined in the memory 200.

The memory 200 further stores reference shape data for perceiving an object around an ego vehicle along with the reference labeling data. Like the reference labeling data, the reference shape data is constructed to include first to N-th reference shape data. The reference shape data defines various types of objects, respectively. For example, a plurality of reference shape data that defines a passenger vehicle, a utility vehicle, a bus, a trailer, an ambulance, a fire truck, a recovery vehicle, a cleaning vehicle (i.e., four-wheel vehicles), a motorcycle and a bicycle (i.e., two-wheel vehicles), and other three-wheel vehicles, respectively, may be defined in the memory 200. The plurality of reference shape data functions as shape data of an object, which was used for a conventional autonomous driving system to perceive a surrounding object.

The processor 300 is a main subject that perceives a target object based on the results of the detection of the target object around an ego vehicle by the sensor module 100, and may be implemented as a central processing unit (CPU) or a system on chip (SoC). The processor 300 may control a plurality of hardware or software components connected to the processor 300 by driving an operating system or an application, and may perform various types of data processing and operations. The processor 300 may be constructed to execute at least one instruction that has been stored in the memory 200 and to store the results of the execution in the memory 200 as data.

In the present embodiment, the processor 300 operates to extract actual labeling data, corresponding to reference labeling data, from the results of the detection of a target object by the sensor module 100 and to perceive the target object by comparing the extracted actual labeling data and the reference labeling data. A process of perceiving a target object based on reference labeling data is defined as a labeling-based perception process.

The labeling-based perception process is applied to determine whether a target object corresponds to an object that is defined by M-th reference labeling data, among first to N-th reference labeling data. Specifically, the processor 300 determines whether a first condition in which a visible parameter included in each actual labeling data and each visible parameter included in the M-th reference labeling data are identical with each other is satisfied through the labeling-based perception process.

As a detailed example, when a visible parameter of actual labeling data corresponds to "(H1, H2, D, R, L) = (α, β, γ, δ, ε)", if reference labeling data having a visible parameter identical with the visible parameter of the actual labeling data is M-th reference labeling data and the M-th reference labeling data defines a "passenger vehicle", the processor 300 perceives a target object as a passenger vehicle that is defined by the M-th reference labeling data.

In parallel to the labeling-based perception process, the processor 300 may operate to determine actual shape data of a target object from the results of the detection of the target object by a sensor and to perceive the target object by comparing the determined actual shape data and reference shape data. A process of perceiving a target object based on reference shape data is defined as a shape-based perception process.

The shape-based perception process is applied to determine whether a target object corresponds to an object that is defined by M-th reference shape data, among first to N-th reference shape data. Specifically, the processor 300 determines whether a second condition in which actual shape data and the M-th reference shape data are identical with each other is satisfied through the shape-based perception process. That is, the shape-based perception process corresponds to a conventional perception process of perceiving the type of object by determining whether an actual shape of the corresponding object and a reference shape that has been stored in the memory 200 are identical with each other.

The processor 300 performs the labeling-based perception process and the shape-based perception process in parallel. If the first condition is determined to have been satisfied based on the results of the labeling-based perception process and the second condition is determined to have been satisfied based on the results of the shape-based perception process, the processor 300 perceives a target object as an object that is defined by M-th reference labeling data. That is, if the first and second conditions according to each of the conventional shape-based perception process and the labeling-based perception process presented in the present embodiment are simultaneously satisfied by applying the conventional shape-based perception process and the labeling-based perception process in an overlapping manner, a target object may be perceived. Accordingly, perception accuracy of the target object can be improved. If any one of the first and second conditions has not been satisfied, the processor 300 outputs, to a user, a warning that provides notification of the abnormality of the perception function of an autonomous driving system, and may discard corresponding actual data.

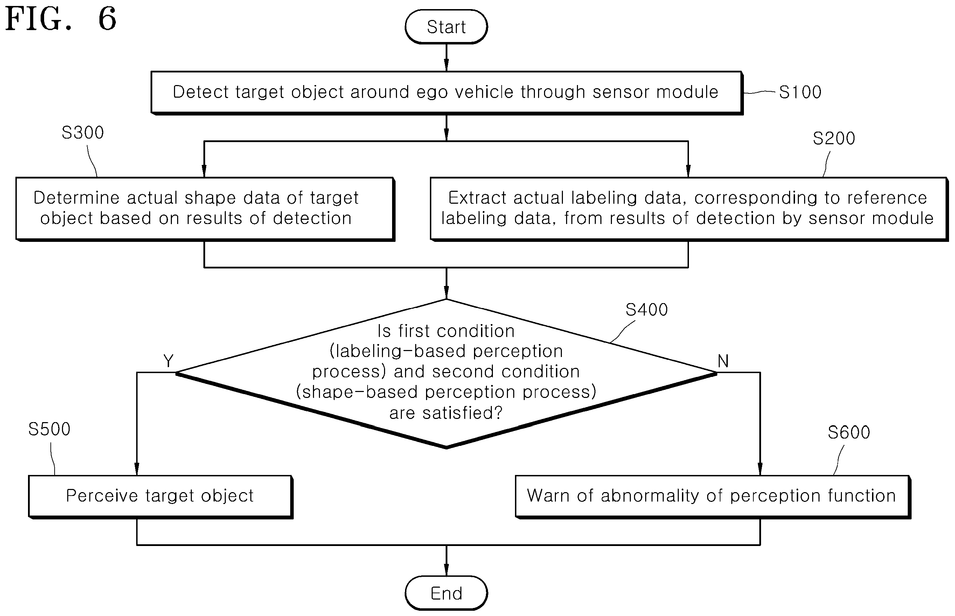

FIG. 6 is a flowchart illustrating a method of perceiving an object according to the present embodiment. The method of perceiving an object according to the present embodiment is described with reference to FIG. 6. A detailed description that is redundant with the aforementioned contents is omitted, and a time-series construction is basically described.

First, the processor 300 detects a target object around an ego vehicle through the sensor module 100 (S100).

Next, the processor 300 extracts actual labeling data, corresponding to reference labeling data, from the results of the detection by the sensor module 100 (S200).

In parallel to step S200, the processor 300 determines actual shape data of the target object based on the results of the detection by the sensor module 100 (S300).

After steps S200 and S300, the processor 300 determines whether the first condition according to the labeling-based perception process is satisfied and whether the second condition according to the shape-based perception process is satisfied (S400). That is, the processor 300 determines whether the first condition each visible parameter included in the actual labeling data and each visible parameter included in M-th reference labeling data are identical with each other is satisfied, and simultaneously determines whether the second condition in which the actual shape data and the M-th reference shape data are identical with each other is satisfied.

If both the first and second conditions are satisfied in step S400, the processor 300 perceives the target object as an object that is defined by the M-th reference labeling data (S500).

If any one of the first and second conditions is not satisfied in step S400, the processor 300 outputs, to a user, a warning that provides notification of the abnormality of the perception function of an autonomous driving system, and discards corresponding actual data (S600).

As described above, according to the present embodiment, perception accuracy of a target object can be improved by perceiving the target object around an ego vehicle in a way to apply labeling data and shape data that define the type of object, that is, a target of perception, in an overlapping manner.

An implementation described in this specification may be realized as a method or process, an apparatus, a software program, a data stream, or a signal, for example. Although the present disclosure has been discussed only in the context of a single form of an implementation (e.g., discussed as only a method), an implementation of a discussed characteristic may also be realized in another form (e.g., an apparatus or program). The apparatus may be implemented as proper hardware, software, or firmware. The method may be implemented in an apparatus, such as a processor commonly referring to a processing device, including a computer, a microprocessor, an integrated circuit, or a programmable logic device, for example. The processor includes a communication device, such as a computer, a cell phone, a mobile phone/personal digital assistant ("PDA"), and another device which facilitate the communication of information between end users.

### [Description of reference numerals]

100: sensor module
200: memory
300: processor

## Claims

1. An apparatus for perceiving an object, comprising:
a memory that is a memory for storing reference labeling data,
wherein the reference labeling data defines a type of object that is a target of perception,
wherein the reference labeling data comprises one or more visible parameters detectable by the sensor, and
wherein the one or more visible parameters comprise (i) a height of a head lamp based on a ground, (ii) a height of a tail lamp based on the ground, and (iii) a distance between the head lamps on left and right sides thereof and a distance between the tail lamps on left and right sides thereof; and
a processor configured to extract actual labeling data, corresponding to the reference labeling data, from results of a detection of a target object by a sensor of an ego vehicle and to perceive the target object by comparing the extracted actual labeling data and the reference labeling data,
wherein:
the reference labeling data comprises first to N-th reference labeling data, wherein N is a natural number equal to or greater than 2,
the reference labeling data define various types of objects, respectively,
the processor determines whether the target object corresponds to an object that is defined by the M-th reference labeling data, wherein M is a natural number greater than or equal to 1 and less than or equal N, by using a labeling-based perception process,
the labeling-based perception process is a process of determining whether a first condition in which each visible parameter included in the actual labeling data and each visible parameter included in the M-th reference labeling data, wherein M is a natural number greater than or equal to 1 and less than or equal to N, are identical with each other is satisfied,
the memory further stores data of reference shape of the objects along with the reference labeling data,
the processor determines data of actual shape of the target object based on the results of the detection of the target object by the sensor and perceives the target object by comparing the determined data of the actual shape and the data of the reference shape,
the data of the reference shape comprises first to N-th reference shape data, wherein N is a natural number equal to or greater than 2,
the data of the reference shape defines various types of objects, respectively,
the processor determines whether the target object corresponds to an object that is defined by M-th reference shape data by using a shape-based perception process,
the shape-based perception process is a process of determining whether a second condition in which the data of the actual shape and the M-th reference shape data are identical with each other is satisfied,
wherein the processor perceives the target object as the object that is defined by the M-th reference labeling data if the first condition is determined to have been satisfied as a result of the labeling-based perception process and the second condition is determined to have been satisfied as a result of the shape-based perception process, and outputs a warning that provides notification of abnormality of the perception process, if any one of the first and second conditions has not been satisfied.

2. The apparatus of claim 1, wherein the processor performs the labeling-based perception process and the shape-based perception process in parallel.

3. A method of perceiving an object, comprising:
detecting, by a processor, a target object around an ego vehicle by using a sensor of the ego vehicle;
extracting, by the processor, actual labeling data, corresponding to reference labeling data stored in memory, from results of the detection by the sensor, the reference labeling data defines a type of object that is a target of perception,
wherein the reference labeling data comprises one or more visible parameters detectable by the sensor, and
wherein the one or more visible parameters comprise (i) a height of a head lamp based on a ground, (ii) a height of a tail lamp based on the ground, and (iii) a distance between the head lamps on left and right sides thereof and a distance between the tail lamps on left and right sides thereof;
comparing, by the processor, the extracted actual labeling data and the reference labeling data; and
perceiving, by the processor, the target object based on a result of the comparison between the actual labeling data and the reference labeling data,
wherein:
the reference labeling data comprises first to N-th reference labeling data, wherein N is a natural number equal to or greater than 2,
the reference labeling data define various types of objects, respectively,
the processor determines whether the target object corresponds to an object that is defined by the M-th reference labeling data, wherein M is a natural number greater than or equal to 1 and less than or equal to N, by using a labeling-based perception process,
the labeling-based perception process is a process of determining whether a first condition in which each visible parameter included in the actual labeling data and each visible parameter included in the M-th reference labeling data, wherein M
is a natural number greater than or equal to 1 and less than or equal to N, are identical with each other is satisfied,
the method further comprises:
storing, in the memory, data of reference shape of the objects along with the reference labeling data,
determining, by the processor, data of actual shape of the target object based on the results of the detection of the target object by the sensor and perceives the target object by comparing the determined data of the actual shape and the data of the reference shape,
wherein the data of the reference shape comprises first to N-th reference shape data, wherein N is a natural number equal to or greater than 2, the data of the reference shape defines various types of objects, respectively,
the processor determines whether the target object corresponds to an object that is defined by M-th reference shape data by using a shape-based perception process,
wherein the shape-based perception process is a process of determining whether a second condition in which the data of the actual shape and the M-th reference shape data are identical with each other is satisfied; and
perceiving, by the processor, the target object as the object that is defined by the M-th reference labeling data if the first condition is determined to have been satisfied as a result of the labeling-based perception process and the second condition is determined to have been satisfied as a result of the shape-based perception process, and outputting, by the processor, a warning that provides notification of abnormality of the perception process, if any one of the first and second conditions has not been satisfied.

## Patentansprüche

1. Vorrichtung zur Wahrnehmung eines Objekts, umfassend:
einen Speicher, der ein Speicher zum Speichern von Referenzkennzeichnungsdaten ist,
wobei die Referenzkennzeichnungsdaten einen Objekttyp definieren, der ein Wahrnehmungsziel ist,
wobei die Referenzkennzeichnungsdaten einen oder mehrere durch den Sensor erkennbare sichtbare Parameter umfassen und
wobei der eine oder die mehreren sichtbaren Parameter (i) eine Höhe eines Frontscheinwerfers bezogen auf einen Boden, (ii) eine Höhe einer Rückleuchte bezogen auf den Boden, und (iii) einen Abstand zwischen den Frontscheinwerfern auf der linken und der rechten Seite und einen Abstand zwischen den Rückleuchten auf der linken und der rechten Seite umfassen; und
einen Prozessor, der dazu eingerichtet ist, aus Ergebnissen einer Erkennung eines Zielobjekts durch einen Sensor eines Ego-Fahrzeugs tatsächliche Kennzeichnungsdaten zu extrahieren, die den Referenzkennzeichnungsdaten entsprechen, und das Zielobjekt durch Vergleich der extrahierten tatsächlichen Kennzeichnungsdaten und der Referenzkennzeichnungsdaten wahrzunehmen,
wobei:
die Referenzkennzeichnungsdaten erste bis N-te Referenzkennzeichnungsdaten umfassen, wobei N eine natürliche Zahl gleich oder größer als 2 ist,
die Referenzkennzeichnungsdaten jeweils verschiedene Objekttypen definieren,
der Prozessor durch Verwendung eines kennzeichnungsbasierten Wahrnehmungsprozesses bestimmt, ob das Zielobjekt einem Objekt entspricht, das durch die M-ten Referenzkennzeichnungsdaten definiert ist, wobei M eine natürliche Zahl größer oder gleich 1 und kleiner oder gleich N ist,
der kennzeichnungsbasierte Wahrnehmungsprozess ein Prozess zum Bestimmen ist, ob eine erste Bedingung erfüllt ist, in der jeder in den tatsächlichen Kennzeichnungsdaten enthaltene sichtbare Parameter und jeder in den M-ten Referenzkennzeichnungsdaten enthaltene sichtbare Parameter miteinander identisch sind, wobei M eine natürliche Zahl größer oder gleich 1 und kleiner oder gleich N ist,
der Speicher ferner Referenzformdaten der Objekte zusammen mit den Referenzkennzeichnungsdaten speichert,
der Prozessor tatsächliche Formdaten des Zielobjekts basierend auf den Ergebnissen der Erkennung des Zielobjekts durch den Sensor bestimmt und das Zielobjekt durch Vergleich der bestimmten tatsächlichen Formdaten und der Referenzformdaten wahrnimmt,
die Referenzformdaten erste bis N-te Referenzformdaten umfassen, wobei N eine natürliche Zahl gleich oder größer als 2 ist,
die Referenzformdaten jeweils verschiedene Objekttypen definieren,
der Prozessor durch Verwendung eines formbasierten Wahrnehmungsprozesses bestimmt, ob das Zielobjekt einem Objekt entspricht, das durch die M-ten Referenzformdaten definiert ist,
der formbasierte Wahrnehmungsprozess ein Prozess zum Bestimmen ist, ob eine zweite Bedingung erfüllt ist, in der die tatsächlichen Formdaten und die M-ten Referenzformdaten miteinander identisch sind,
wobei der Prozessor das Zielobjekt als das Objekt wahrnimmt, das durch die M-ten Referenzkennzeichnungsdaten definiert ist, wenn als ein Ergebnis des kennzeichnungsbasierten Wahrnehmungsprozesses bestimmt wird, dass die erste Bedingung erfüllt ist, und als ein Ergebnis des formbasierten Wahrnehmungsprozesses bestimmt wird, dass die zweite Bedingung erfüllt ist, und eine Warnung ausgibt, die eine Meldung einer Anomalie des Wahrnehmungsprozesses bereitstellt, wenn eine der ersten und der zweiten Bedingung nicht erfüllt ist.

2. Vorrichtung nach Anspruch 1, wobei der Prozessor den kennzeichnungsbasierten Wahrnehmungsprozess und den formbasierten Wahrnehmungsprozess parallel ausführt.

3. Verfahren zur Wahrnehmung eines Objekts, umfassend:
Erkennen eines Zielobjekts um ein Ego-Fahrzeug herum durch Verwendung eines Sensors des Ego-Fahrzeugs durch einen Prozessor;
Extrahieren von tatsächlichen Kennzeichnungsdaten, die im Speicher gespeicherten Referenzkennzeichnungsdaten entsprechen, durch den Prozessor aus Ergebnissen der Erkennung durch den Sensor, wobei die Referenzkennzeichnungsdaten einen Objekttyp definieren, der ein Wahrnehmungsziel ist,
wobei die Referenzkennzeichnungsdaten einen oder mehrere durch den Sensor erkennbare sichtbare Parameter umfassen und
wobei der eine oder die mehreren sichtbaren Parameter (i) eine Höhe eines Frontscheinwerfers bezogen auf einen Boden, (ii) eine Höhe einer Rückleuchte bezogen auf den Boden, und (iii) einen Abstand zwischen den Frontscheinwerfern auf der linken und der rechten Seite und einen Abstand zwischen den Rückleuchten auf der linken und der rechten Seite umfassen; und
Vergleichen der extrahierten tatsächlichen Kennzeichnungsdaten mit den Referenzkennzeichnungsdaten durch den Prozessor; und
Wahrnehmen des Zielobjekts durch den Prozessor basierend auf einem Ergebnis des Vergleichs zwischen den tatsächlichen Kennzeichnungsdaten und den Referenzkennzeichnungsdaten,
wobei:
die Referenzkennzeichnungsdaten erste bis N-te Referenzkennzeichnungsdaten umfassen, wobei N eine natürliche Zahl gleich oder größer als 2 ist,
die Referenzkennzeichnungsdaten jeweils verschiedene Objekttypen definieren,
der Prozessor durch Verwendung eines kennzeichnungsbasierten Wahrnehmungsprozesses bestimmt, ob das Zielobjekt einem Objekt entspricht, das durch die M-ten Referenzkennzeichnungsdaten definiert ist, wobei M eine natürliche Zahl größer oder gleich 1 und kleiner oder gleich N ist,
der kennzeichnungsbasierte Wahrnehmungsprozess ein Prozess zum Bestimmen ist, ob eine erste Bedingung erfüllt ist, in der jeder in den tatsächlichen Kennzeichnungsdaten enthaltene sichtbare Parameter und jeder in den M-ten Referenzkennzeichnungsdaten enthaltene sichtbare Parameter miteinander identisch sind, wobei M eine natürliche Zahl größer oder gleich 1 und kleiner oder gleich N ist,
wobei das Verfahren weiterhin umfasst:
Speichern von Referenzformdaten der Objekte zusammen mit den Referenzkennzeichnungsdaten im Speicher,
Bestimmen von tatsächlichen Formdaten des Zielobjekts durch den Prozessor basierend auf den Ergebnissen der Erkennung des Zielobjekts durch den Sensor und Wahrnehmen des Zielobjekts durch Vergleichen der bestimmten tatsächlichen Formdaten und der Referenzformdaten,
wobei die Referenzformdaten erste bis N-te Referenzformdaten umfassen, wobei N eine natürliche Zahl gleich oder größer als 2 ist,
die Referenzformdaten jeweils verschiedene Objekttypen definieren,
der Prozessor durch Verwendung eines formbasierten Wahrnehmungsprozesses bestimmt, ob das Zielobjekt einem Objekt entspricht, das durch die M-ten Referenzformdaten definiert ist,
wobei der formbasierte Wahrnehmungsprozess ein Prozess zum Bestimmen ist, ob eine zweite Bedingung erfüllt ist, in der die tatsächlichen Formdaten und die M-ten Referenzformdaten miteinander identisch sind; und
Wahrnehmen des Zielobjekts durch den Prozessor als das Objekt, das durch die M-ten Referenzkennzeichnungsdaten definiert ist, wenn als ein Ergebnis des kennzeichnungsbasierten Wahrnehmungsprozesses bestimmt wird, dass die erste Bedingung erfüllt ist, und als ein Ergebnis des formbasierten Wahrnehmungsprozesses bestimmt wird, dass die zweite Bedingung erfüllt ist, und Ausgeben einer Warnung durch den Prozessor, die eine Meldung einer Anomalie des Wahrnehmungsprozesses bereitstellt, wenn eine der ersten und der zweiten Bedingung nicht erfüllt ist.

## Revendications

1. Appareil de perception d'un objet, comprenant:
une mémoire qui est une mémoire servant à stocker des données d'étiquetage de référence,
dans lequel les données d'étiquetage de référence définissent un type d'objet qui est une cible de perception,
dans lequel les données d'étiquetage de référence comprennent un ou plusieurs paramètres visibles détectables par le capteur, et
dans lequel le ou les paramètres visibles comprennent (i) la hauteur d'un phare par rapport au sol, (ii) la hauteur d'un feu arrière par rapport au sol, et (iii) la distance entre les phares situés à gauche et à droite et la distance entre les feux arrière situés à gauche et à droite; et
un processeur configuré pour extraire des données d'étiquetage réelles, correspondant aux données d'étiquetage de référence, provenant des résultats d'une détection d'un objet cible par un capteur d'un véhicule ego et pour percevoir l'objet cible en comparant les données d'étiquetage réelles extraites et les données d'étiquetage de référence,
dans lequel:
les données d'étiquetage de référence comprennent les premières à des N- ièmes données d'étiquetage de référence, N étant un nombre naturel égal ou supérieur à 2,
les données d'étiquetage de référence définissent différents types d'objets, respectivement,
le processeur détermine si l'objet cible correspond à un objet défini par les M- ièmes données d'étiquetage de référence, M est un nombre naturel supérieur ou égal à 1 et inférieur ou égal à N, à l'aide d'un processus de perception basé sur le marquage,
le processus de perception basé sur l'étiquetage est un processus qui consiste à déterminer si une première condition dans laquelle chaque paramètre visible inclus dans les données d'étiquetage réelles et chaque paramètre visible inclus dans les M- ièmes données d'étiquetage de référence, M étant un nombre naturel supérieur ou égal à 1 et inférieur ou égal à N, sont identiques entre eux, est satisfaite,
la mémoire stocke en outre des données relatives à la forme de référence des objets conjointement avec les données d'étiquetage de référence,
le processeur détermine les données relatives à la forme réelle de l'objet cible sur la base des résultats de la détection de l'objet cible par le capteur et perçoit l'objet cible en comparant les données déterminées relatives à la forme réelle et les données relatives à la forme de référence,
les données de la forme de référence comprennent des premières à des N- ièmes données de forme de référence, N étant un nombre naturel égal ou supérieur à 2,
les données de la forme de référence définissent différents types d'objets, respectivement,
le processeur détermine si l'objet cible correspond à un objet défini par les M- ièmes données de forme de référence au moyen d'un processus de perception basé sur la forme,
le processus de perception basé sur la forme est un processus qui consiste à déterminer si une deuxième condition, dans laquelle les données de la forme réelle et les données de la M-ième forme de référence sont identiques entre elles, est satisfaite,
dans lequel le processeur perçoit l'objet cible comme étant l'objet défini par les M-ièmes données d'étiquetage de référence si la première condition est déterminée comme étant remplie à la suite du processus de perception basé sur l'étiquetage et si la deuxième condition est déterminée comme étant remplie à la suite du processus de perception basé sur la forme, et émet un avertissement signalant une anomalie du processus de perception si l'une parmi les première et deuxième conditions n'est pas remplie.

2. Appareil selon la revendication 1, dans lequel le processeur effectue en parallèle le processus de perception basé sur l'étiquetage et le processus de perception basé sur la forme.

3. Procédé de perception d'un objet, comprenant:
la détection, par un processeur, d'un objet cible autour d'un véhicule égo à l'aide d'un capteur du véhicule égo;
l'extraction, par le processeur, des données d'étiquetage réelles, correspondant aux données d'étiquetage de référence stockées en mémoire, à partir des résultats de la détection par le capteur, les données d'étiquetage de référence définissant un type d'objet qui est une cible de perception,
dans lequel les données d'étiquetage de référence comprennent un ou plusieurs paramètres visibles détectables par le capteur, et
dans lequel le ou les paramètres visibles comprennent (i) la hauteur d'un phare par rapport au sol, (ii) la hauteur d'un feu arrière par rapport au sol, et (iii) la distance entre les phares situés à gauche et à droite et la distance entre les feux arrière situés à gauche et à droite;
la comparaison, par le processeur, des données d'étiquetage réelles extraites et des données d'étiquetage de référence; et
la perception, par le processeur, de l'objet cible sur la base d'un résultat de la comparaison entre les données d'étiquetage réelles et les données d'étiquetage de référence,
dans lequel:
les données d'étiquetage de référence comprennent les premières à des N- ièmes données d'étiquetage de référence, N étant un nombre naturel égal ou supérieur à 2,
les données d'étiquetage de référence définissent différents types d'objets, respectivement,
le processeur détermine si l'objet cible correspond à un objet défini par les M- °ièmes données d'étiquetage de référence, M est un nombre naturel supérieur ou égal à 1 et inférieur ou égal à N, à l'aide d'un processus de perception basé sur le marquage,
le processus de perception basé sur l'étiquetage est un processus qui consiste à déterminer si une première condition dans laquelle chaque paramètre visible inclus dans les données d'étiquetage réelles et chaque paramètre visible inclus dans les M-ièmes données d'étiquetage de référence, M étant un nombre naturel supérieur ou égal à 1 et inférieur ou égal à N, sont identiques entre eux, est satisfaite,
le procédé comprenant en outre:
le stockage, dans la mémoire, de données de forme de référence des objets conjointement avec les données d'étiquetage de référence,
la détermination, par le processeur, des données relatives à la forme réelle de l'objet cible sur la base des résultats de la détection de l'objet cible par le capteur et perçoit l'objet cible en comparant les données déterminées relatives à la forme réelle et les données relatives à la forme de référence,
dans lequel les données de la forme de référence comprennent des premières à des N-ièmes données de forme de référence, N étant un nombre naturel égal ou supérieur à 2,
les données de la forme de référence définissent différents types d'objets, respectivement,
le processeur détermine si l'objet cible correspond à un objet défini par les M- ièmes données de forme de référence au moyen d'un processus de perception basé sur la forme,
dans lequel le processus de perception basé sur la forme est un processus qui consiste à déterminer si une deuxième condition, dans laquelle les données de la forme réelle et les données de la M-ième forme de référence sont identiques entre elles, est satisfaite; et
la perception, par le processeur, de l'objet cible comme étant l'objet défini par les M-ièmes données d'étiquetage de référence si la première condition est déterminée comme étant remplie à la suite du processus de perception basé sur l'étiquetage et si la deuxième condition est déterminée comme étant remplie à la suite du processus de perception basé sur la forme, et l'émission d'un avertissement signalant une anomalie du processus de perception si l'une parmi les première et deuxième conditions n'est pas remplie.
